# EUROPÄISCHE PATENTANMELDUNG

(11) **EP 1 074 823 A1**
(43) Veröffentlichungstag der Anmeldung: **07.02.2001**
(21) Anmeldenummer: 99115454.3
(22) Anmeldetag: 05.08.1999
(51) Int. Cl.: G01G 19/56, H05B 3/74

(54) **Kochfeld mit Gewichtsmesseinheit**

(71) Anmelder: Schroeder, Walter, 8810 Horgen (CH)
(72) Erfinder: Schroeder, Walter, 8810 Horgen (CH)
(74) Vertreter: Troesch Scheidegger Werner AG

(57) **Zusammenfassung**

Die Erfindung betrifft ein Kochfeld (1) mit mindestens einer Kochstelle (2, ..., 5), wobei eine Gewichtsmesseinheit vorgesehen ist, die aus mindestens einem Sensor, einer Detektoreinrichtung und einer Anzeigeeinheit (13) besteht. Ein mit dem Sensor gemessenes Signal wird dabei der Detektoreinrichtung zugeführt, wobei diese mit der Anzeigeeinheit (13) verbunden ist.

## Beschreibung

Die vorliegende Erfindung betrifft ein Kochfeld nach dem Oberbegriff des Patentanspruchs 1.

Kochfelder für den privaten und gewerblichen Gebrauch bestehen zumeist aus mehreren unabhängig voneinander betreibbaren Kochstellen, d.h. einzelnen Kochplatten, auf denen Pfannen zum Erwärmen von Kochgut positioniert werden. Derzeit kommen besonders Glaskeramikkochfelder zum Einsatz, wobei die unterschiedlichsten Energiezufuhr-Prinzipien zum Einsatz kommen, wie zum Beispiel Elektroheizungen, basierend auf Strahlungs- und/oder Kontaktheizkörpern oder Induktion, oder Gasheizungen.

Beim Kochen auf diesen bekannten Kochfeldern sind insbesondere dann weitere Hilfsmittel, wie beispielsweise eine Waage und Massbecher, erforderlich, wenn nach einem Kochrezept gekocht wird.

Der vorliegenden Erfindung liegt daher die Aufgabe zugrunde, ein Kochfeld anzugeben, das der vorstehend genannten Nachteil nicht aufweist.

Diese Aufgabe wird durch die im kennzeichnenden Teil des Patentanspruchs 1 angegebenen Massnahmen gelöst. Vorteilhafte Ausgestaltungen der Erfindung sind in weiteren Ansprüchen angegeben.

Die Erfindung weist die folgenden Vorteile auf: Indem mindestens in eine Kochstelle eines Kochfeldes eine Gewichtsmesseinheit integriert ist, wird eine exakte Rezeptverfolgung ermöglicht, und zwar auch bei heissem Kochgut. Ein Abwiegen von Zutaten mit einer herkömmlichen Küchenwaage entfällt, denn die Erfindung ermöglicht es, dass die Zutaten direkt in die auf der Kochstelle stehende Pfanne gegeben werden, wobei über die Anzeigeeinheit die gewünschte Menge bzw. das gewünschte Gewicht kontrolliert wird.

Darüber hinaus ist die Gewichtsmesseinheit jederzeit als normale Küchenwaage verfügbar, dies insbesondere auch im kalten Zustand der Kochstelle. Das Bereitstellen einer herkömmlichen Küchenwaage entfällt bei der Erfindung. Ebenso ist kein zusätzlicher Platz für die Waage gemäss der Erfindung notwendig, denn ist sie doch vollständig in ein Kochfeld bzw. in eine Kochstelle integriert, also quasi unsichtbar.

Die Erfindung wird nachfolgend anhand von Zeichnungen beispielsweise näher erläutert. Dabei zeigen
- Fig. 1: ein erfindungsgemässes Kochfeld mit einer integrierten Gewichtsmesseinheit und
- Fig. 2: ein prinzipielle Blockschaltbild der Gewichtsmesseinheit.

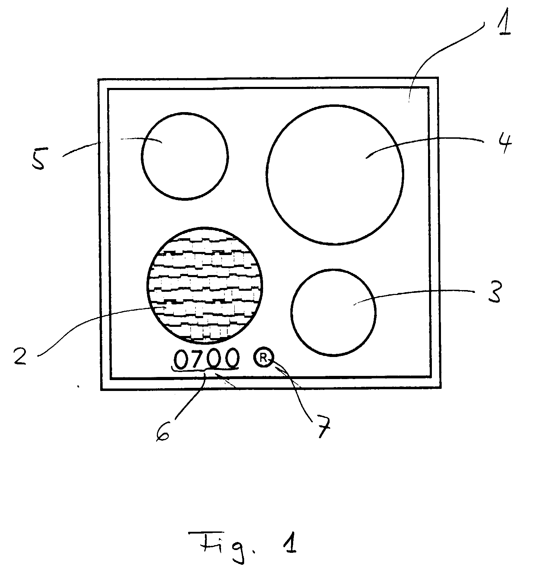

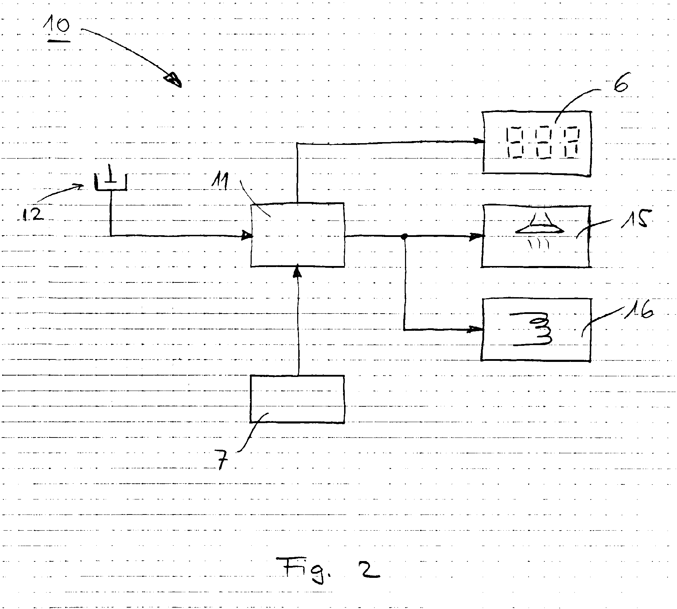

In Fig. 1 ist ein erfindungsgemässes Kochfeld 1, hier unter Verwendung von Glaskeramik, mit vier Kochstellen 2 bis 5 dargestellt, von denen die Kochstelle 2 mit einer Gewichtsmesseinheit ausgestattet ist, wobei bei der in Fig. 1 dargestellten Ausführungsform die Gewichtsmesseinheit in die Kochstelle 2 integriert ist, d.h. es wird das Gewicht der auf die Kochstelle 2 gelegten Gegenstände gemessen. Zur Gewichtsmesseinheit, die anhand von Fig. 2 näher erläutert wird, gehört zunächst eine Anzeigeeinheit 6, auf der das momentane Gewicht angezeigt wird, wobei über eine Eingabeeinheit 7, die bei dieser Ausführungsform aus einer einzigen Taste R besteht, beispielsweise ein Nullabgleich vorgenommen werden kann. So ist vorgesehen, dass nach dem Positionieren einer Pfanne auf der Kochstelle 2 durch Drücken der Taste R die Anzeigeeinheit 6 wiederum auf Null zurückgestellt werden kann. Soll nun eine bestimmte Menge an Kochgut bereit gestellt werden, so kann dies erfindungsgemäss dadurch vorgenommen werden, dass soviel vom gewünschten Kochgut direkt in die auf der Kochstelle 2 stehende Pfanne gegeben wird, bis auf der Anzeigeeinheit 6 das gewünschte Gewicht angezeigt wird.

Die in Fig. 1 dargestellte Ausführungsform der Erfindung ermöglicht bereits eine erheblich Komfortsteigerung gegenüber herkömmlichen Lösungen. Eine weitere Verbesserung besteht darin, das mehrere oder alle Kochstellen 2 bis 5 mit einer entsprechenden Gewichtsmesseinheit ausgestattet sind. Entsprechend sind mehrere Anzeige- und Eingabeeinheiten vorzusehen, oder aber es ist eine Umschalteinheit vorzusehen, mit Hilfe derer eine gewünschte Kochstelle auf die einzige Anzeigeeinheit geschaltet werden kann.

Fig. 2 zeigt ein prinzipielles Blockschaltbild einer erwähnten Gewichtsmesseinheit 10, die zunächst aus einem Sensor 12, einer Detektoreinrichtung 11 und der erwähnten Anzeige- bzw. Eingabeeinheit 6 bzw. 7 besteht. Des weiteren sind ein Heizaggregat 15 der entsprechenden Kochstelle 2 und ein Abzugsaggregat 15 des Kochfeldes 1 zur Erläuterung weiterer Ausführungsformen der Erfindung dargestellt.

Die Gewichtsmesseinheit 10 besteht in einer minimalen Ausführungsform aus dem Sensor 12, der Detektoreinrichtung 11, der Anzeigeeinheit 6 und der Eingabeeinheit 7. Als Sensor 12 kann ein beliebiger Kraftmessfühler verwendet werden. In der bevorzugten Ausführungsform ist dies jedoch ein piezoelektrisches Wandlerelement. Solche Kraftumformer sind allgemein bekannt, wobei im allgemeinen auf die deutsche Patentschrift DE-35 41 791 und im besonderen auf die darin zitierte Druckschrift von Reimpell-Bachmann (Handbuch des Wagenbaues, Band 3, 1966, Berlin-Hamburg, Verlag Bernh. Friedrich Voigt, Seiten 9 bis 11) verwiesen wird. Aus Temperaturgründen kann der Sensor 12 dabei ausserhalb, d.h. am Rand der entsprechenden Kochstelle plaziert werden.

Bei der geringsten Belastung des Kochfelde 1 bzw. der Kochstelle 2 erzeugt der Sensor 12 ein elektrisches Signal, das der Detektoreinrichtung 11 beaufschlagt wird. In dieser wird das Signal aufbereitet, so dass der entsprechende Wert auf der Anzeigeeinheit 6 dargestellt werden kann. Mit der Detektoreinrichtung 11 ist im weiteren die Eingabeeinheit 7 wirkverbunden, womit ein Nullabgleich bzw. ein Rücksetzen der Gewichtsmesseinheit 10 ebenfalls über die Detektoreinrichtung 11 erfolgt.

In einer weiteren Ausführungsform der Erfindung ist die Detektoreinrichtung 11 - wie kurz erwähnt und in Fig. 2 dargestellt - darüber hinaus mit einem Heiz- und/oder Abzugsaggregat 16 bzw. 15 verbunden. Damit kann mit Hilfe der erfindungsgemässen Gewichtsmesseinheit 10 des weiteren die Steuerung des Abzuges bzw. die Freigabe der Heizung für die entsprechende Kochstelle 2 übernommen werden. So ist vorgesehen - im Falle der Abzugsteuerung - das Abzugsaggregat 15 zu aktivieren, sobald eine vorab einstellbare Gewichtslimite auf einer der Kochstellen registriert wird und/oder gleichzeitig eine gewisse Temperatur bei der entsprechenden Kochstelle gemessen wird. Im Fall der Freigabe des Heizaggregates 16 ist eine ähnliche Funktion vorgesehen: Das Heizaggregat 16 wird nur dann freigegeben, wenn ein vorab einstellbares minimales Gewicht auf der entsprechenden Kochstelle gemessen wird. Damit kann eine Überhitzung dieser Kochstelle vermieden werden. Diese Funktion wird auch etwa als Topf-Erkennung bezeichnet.

## Patentansprüche

1. Kochfeld (1) mit mindestens einer Kochstelle (2, ..., 5), dadurch gekennzeichnet, dass eine Gewichtsmesseinheit (10), bestehend aus mindestens einem Sensor (12), einer Detektoreinrichtung (11) und einer Anzeigeeinheit (6), vorgesehen ist, wobei ein mit dem Sensor (12) gemessenes Signal der Detektoreinrichtung (11) beaufschlagt ist, die mit der Anzeigeeinheit (6) verbunden ist.

2. Kochfeld (1) nach Anspruch 1, dadurch gekennzeichnet, dass die Gewichtsmesseinheit (10) in die Kochstelle (2, ..., 5) integriert ist.

3. Kochfeld (1) nach Anspruch 1 oder 2, dadurch gekennzeichnet, dass eine Eingabeeinheit (7) vorgesehen ist, die mit der Detektoreinrichtung (11) der Gewichtsmesseinheit (10) verbunden ist.

4. Kochfeld (1) nach Anspruch 3, dadurch gekennzeichnet, dass die Eingabeeinheit (7) ein Tastenelement ist.

5. Kochfeld (1) nach einem der vorangehenden Ansprüche, dadurch gekennzeichnet, dass der Sensor (12) ein Piezo-Wandlerelement ist.

6. Kochfeld (1) nach einem der vorangehenden Ansprüche, dadurch gekennzeichnet, dass, bei mehreren Kochstellen (2, ..., 5), jede Kochstelle (2, ..., 5) mit einer Gewichtsmesseinheit (10) ausgestattet ist.

7. Kochfeld (1) nach einem der vorangehenden Ansprüche, dadurch gekennzeichnet, dass die Gewichtsmesseinheit (10) mit einem Abzugaggregat (15) wirkverbunden ist, wobei dieses selbsttätig eingeschaltet wird, sobald eine vorgebbare Gewichtslimite in der Detektoreinrichtung (11) registriert wird.

8. Kochfeld (1) nach einem der vorangehenden Ansprüche, dadurch gekennzeichnet, dass die Gewichtseinheit (10) mit einem Heizaggregat (16) der entsprechenden Kochstelle (2, ..., 5) wirkverbunden ist, wobei das Heizaggregat (16) zum Heizen der Kochstelle (2, ..., 5) freigegeben wird, sobald eine vorgebbare Gewichtslimite in der Detektoreinrichtung (11) registriert wird.

9. Kochfeld (1) nach einem der vorangehenden Ansprüche, dadurch gekennzeichnet, dass als Material für das Kochfeld (1) Glaskeramik verwendet wird.
